# EUROPEAN PATENT APPLICATION

(11) **EP 2 555 111 A1**
(43) Date of publication of application: **06.02.2013**
(21) Application number: 11816007.6
(22) Date of filing: 01.02.2011
(51) Int. Cl.: G06F 9/45, H04W 4/20

(54) **SIGNALING DISPLAY METHOD AND SYSTEM**

(30) Priority: 09.08.2010 CN 201010251389
(71) Applicant: ZTE Corporation, Shenzhen, Guangdong 518057 (CN)
(72) Inventor: MENG, Fanbo, Shenzhen Guangdong 518057 (CN)
(74) Representative: Jansen, Cornelis Marinus
(86) International application number: PCT/CN2011/070880
(87) International publication number: WO 2012/019448

(57) **Abstract**

A signaling display method and a signaling display system are disclosed, wherein the method includes: a conversion module converts a signaling structure represented in a first language into a structure class represented in a second language; a signaling tracing background configures a corresponding relationship between a structure class and a key value, and objectifies the structure class and the key value to be a class object; and when a key value in a received signaling is determined to be matched with the class object, the received signaling is displayed as a tree structure according to the class object. A structure construction method, a structure field assignment method and a tree structure display method are further preset in the structure class. By using the method and the system, a structure relationship in a signaling is shown clearly, thus facilitating problem positioning.

## Description

### TECHNICAL FIELD

The disclosure relates to the field of signaling tracing, and more particularly to a signaling display method and system.

### BACKGROUND

At present, signaling tracing systems are gradually applied in communication systems broadly. Signaling tracing is applied in various services, including short messaging services and multimedia messaging services etc., and can trace and display signalings interacted among service processes and provide corresponding explanation and analysis to facilitate developers to observe signaling contents and interaction processes and position problems which occur in services, e.g. signaling loss and abnormities of signaling contents. Generally, a signaling tracing system may be divided into two parts including a signaling tracing foreground and a signaling tracing background. The signaling tracing foreground, which generally operates on a service processor, is configured to send a signaling in service processing to the signaling tracing background. The signaling tracing background, which operates on a tracing client, e.g. a personal computer, is configured to establish and cancel a tracing task and display signaling contents. Different service processors are applied to different services, including a short messaging service processor and a multimedia messaging service processor, etc.

Generally, signalings are displayed one by one by existing signaling tracing tools, and key information of the signalings is displayed by text. The key information refers to a value of a structure field of a signaling. The structure field is a characteristic field of the signaling, e.g. a parameter item, etc. The disadvantages of such a method are apparent: firstly, the expandability of the method is not high, and different signalings may have different signaling structures which are signalings including different structure fields, thus, different signaling structures naturally include different structure fields and need to be processed differently; if a certain service has hundreds of signaling structures, processing performed by the method will undoubtedly result in a huge amount of codes and complicated maintenance; secondly, the signaling key information is displayed by text, which fails to well reflect the relationships between a root node and leaf nodes and between a parent structure and each substructure thereof in a signaling structure, to indicate the relative position of each piece of key information in the signaling structure and to further express the signaling structure; thirdly, in the method, the key information is acquired by reading a code stream bearing signalings and according to different fields of the key information in the code stream, therefore, if the code stream is abnormal, the key information cannot be located and obtained.

### SUMMARY

In view of this, the main purpose of the disclosure is to provide a signaling display method and system to show a structure relationship in a signaling clearly, thus facilitating problem positioning.

To achieve the purpose above, the technical solution of the disclosure is implemented as follows.

The disclosure provides a signaling display method, and the method includes:
converting, by a conversion module, a signaling structure represented in a first language into a structure class represented in a second language; and
configuring, by a signaling tracing background, a corresponding relationship between a structure class and a key value, and objectifying the structure class and the key value to be a class object; and when determining a key value in a received signaling to be matched with the class object, displaying the received signaling as a tree structure according to the class object.

In the solution above, the first language may be C language and the second language may be java language.

In the solution above, the configuring, by a signaling tracing background, a corresponding relationship between a structure class and a key value may include: configuring, by the signaling tracing background, a corresponding relationship between name of the structure class and the key value according to a structure rule and storing, by the signaling tracing background, the corresponding relationship in a specific file.

In the solution above, the objectifying the structure class and the key value to be a class object may include: creating a class matched with the specific file, creating a class object of the class, adding a key value to the class object, creating a structure object of the structure class according to a structure construction method in the structure class, adding the structure object to the class object and storing the class object.

In the solution above, the determining a key value in a received signaling to be matched with the class object may include: receiving a signaling which includes a key value added according to a structure rule, reading the key value in the signaling, enquiring a class object according to the key value and determining the key value in the signaling to be matched with the class object when the key value in the class object is identical with the key value in the signaling.

In the solution above, the displaying the received signaling as a tree structure according to the class object may include: reading the structure object in the class object, calling a tree structure display method in the structure object, and displaying the signaling as a tree structure; and calling a structure field assignment method in the structure object and adding contents corresponding to a structure field in the signaling to a corresponding structure field of the tree structure.

The disclosure further provides a signaling display system. The system includes: a conversion module, a signaling tracing foreground and a signaling tracing background;
the conversion module converts a signaling structure represented in a first language into a structure class represented in a second language;
the signaling tracing foreground, according to a tracing condition sent by the signaling tracing background, sends a signaling including a key value to the signaling tracing background; and
the signaling tracing background configures a corresponding relationship between a structure class and a key value, and objectifies the structure class and the key value to be a class object; and sends the tracing condition to the signaling tracing foreground, and when determining the key value in the received signaling to be matched with the class object, displays the received signaling as a tree structure according to the class object.

In the solution above, the conversion module may convert the signaling structure represented in C language into the structure class represented in java language.

In the solution above, the signaling tracing background may configure a corresponding relationship between name of the structure class and the key value according to a structure rule and stores the corresponding relationship in a specific file.

In the solution above, the signaling tracing background may create a class matched with the specific file, create a class object of the class, add a key value to the class object, create a structure object of the structure class according to a structure construction method in the structure class, add the structure object to the class object and store the class object.

In the solution above, the signaling tracing background may read the key value in the received signaling, enquire a class object according to the key value, and determine that the key value in the signaling to be matched with the class object when the key value in the class object is identical with the key value in the signaling.

In the solution above, the signaling tracing background may read the structure object in the class object, call a tree structure display method in the structure object, and display the received signaling as a tree structure; and may call a structure field assignment method in the structure object, and add contents of a structure field in the signaling to a corresponding structure field in the tree structure.

The signaling display method and system of the disclosure display a signaling in the form of tree according to a signaling structure. The structure relationships in the signaling are shown clearly, thus facilitating problem positioning. Further, the signaling is converted into a signaling structure of a java structure class which includes all types of signaling structures. A signaling tracing background receives signalings with different signaling structures, and displays the signalings as a tree structure according to a tree structure display method and different converted signaling structures, thus facilitating maintenance. An abnormality in a signaling can be located rapidly and accurately.

### BRIEF DESCRIPTION OF THE DRAWINGS

Fig. 1 is a flowchart illustrating a signaling display method in an embodiment of the disclosure; and
Fig. 2 is a schematic diagram illustrating composition of a signaling display system in an embodiment of the disclosure.

### DETAILED DESCRIPTION

The basic idea of the disclosure is that: a signaling structure represented in a first language is converted into a structure class represented in a second language; a corresponding relationship between a structure class and a key value is configured, and the structure class and the key value are objectified to be a class object; a signaling including a key value is received from a signaling tracing foreground, the key value in the received signaling is determined to be matched with the class object and the signaling is displayed as a tree structure according to the class object;
wherein the solution of the disclosure is described by taking the first language as C language and the second language as java language for example. The key values are different according to different services and may be an event number, a thread number, and etc.

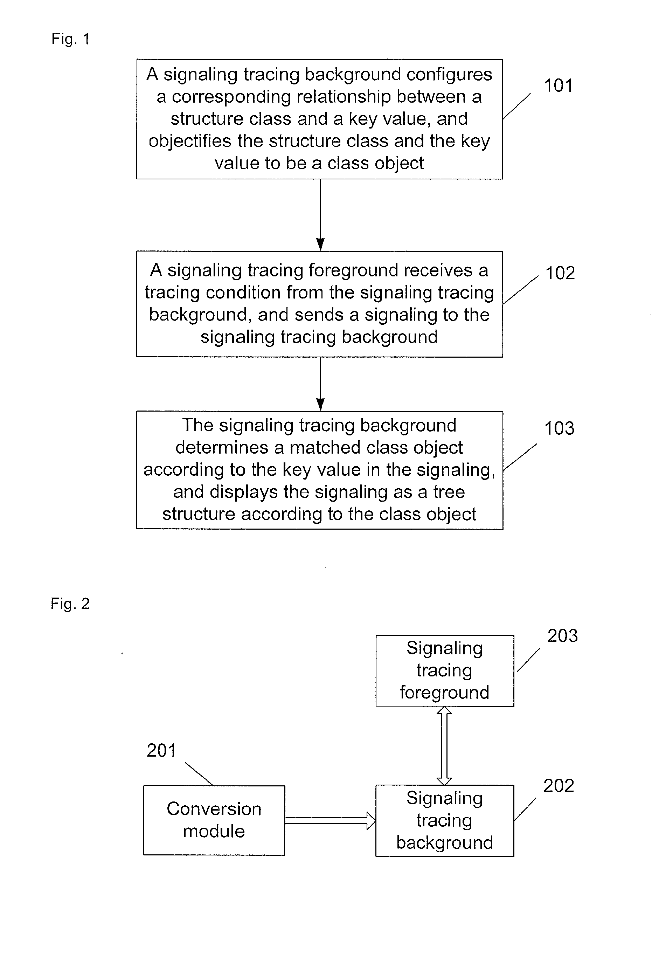

The disclosure is described in details below according to the embodiments and accompanying drawings. A signaling display method, as shown in Fig. 1, includes the following steps.
Step 101: A signaling tracing background configures a corresponding relationship between a structure class and a key value, and objectifies the structure class and the key value to be a class object;
the signaling tracing background associates the structure class with the key value; the structure class is obtained by converting a signaling structure represented in C language into a signaling structure represented in java language by a conversion module; the signaling structure represented in java language is called a structure class which is a file including a structure field, and the structure field is a characteristic field of a signaling, e.g. a parameter item, etc.

The conversion module can be implemented by a conversion tool for converting C language into java language in existing technologies, and a specific conversion process includes: firstly, a conversion rule of structure fields is determined according to the number of bytes occupied by different types of the structure fields in a signaling structure, including: char and signed char in C language correspond to byte in java language; unsigned char, short and signed short in C language correspond to short in java language; unsigned short, int, signed int and long in C language correspond to int in java language; unsigned int and unsigned long in C language correspond to long in java language; then after the conversion rule is determined, conversion can be implemented. The conversion process is described as follows by taking a signaling structure InterCommSendXMLReq_T for example. The signaling structure described in C language is shown as follows:

```
typedef struct
   {
       unsigned short all_len;
       unsigned char tag_did;
       DialoguelD d_id;
       unsigned char i_id;
       unsigned char tag_lid;
       unsigned char I_id;
       OperCode opercode;
       unsigned char I_component;
       CParameters i_para;
   }InterCommSendXMLReq_T;
```

where DialoguelD, OperCode and CParameters are substructures of a parent structure InterCommSendXMLReq, and a signaling structure represented in java language corresponding to the signaling structure can be obtained as below according to the conversion rule:
public int all_len;
public short tag_did;
public DialoguelD d_id;
public short i_id;
public short tag_lid;
public short I_id;
public OperCode opercode;
public short I_component;
public CParameters i_para;

Signaling structures represented in C language are multiple signaling structures which are preset in the conversion module and include all structure types; the signaling tracing background in the disclosure is written in java language and can only identify java language, however, if a signaling structure is represented in C language, then the signaling structure represented in C language needs to be converted into a structure class represented in java language, and the structure class may be self-named as required; at the same time, a structure construction method, a structure field assignment method and a tree structure display method are preset in the converted structure class, and the structure construction method refers to program codes of the structure construction method which is a common construction method in java and used to create a structure class as a structure object, the structure field assignment method refers to program codes of the structure field assignment method and is used to assign contents corresponding to a structure field to the corresponding structure field, and the tree structure display method refers to program codes of the tree structure display method and is used to display a signaling as a tree structure.

The relationship between the conversion module and the signaling tracing background is that: the conversion module is configured to perform structure conversion, a structure class obtained by conversion is added to java engineering of the signaling tracing background, and compiled to generate an operable signaling tracing background.

The associating a structure class with a key value includes: the signaling tracing background associates a structure class name with a corresponding key value according to a structure rule and stores the corresponding relationship between the structure class and the key value in a specific file. The specific file is a file which can be parsed by java, e.g. an Extensible Markup Language (XML) file, and includes groups of signaling structures, i.e. the corresponding relationships between structure classes and the key values; the structure class name may be associated with one or more key values. The structure relationship includes the type of a specific signaling structure and the types and the number of the key values which need to be associated. The following program is taken as an example:

```
   <?xml version= " 1.0 " encoding= " gb2312 " ?>
   <trace>
     <general>
           <struct-count>2</struct-count>
     </general>
     <struct>
       <struct1 event= " 9212 " opecode= " 3 " structname= "
    InterCommSendXMLReq_T" />
       <struct2 event= " 9213 " opecode= " 4 " structname= "
    InterCommSendXMLRsp_T " />
     </ struct >
   </trace>
```

a signaling structure with a structure class name InterCommSendXMLReq_T is associated with key values event= " 9212 " and opecode= "3" , a signaling structure with a structure class name InterCommSendXMLRsp_T is associated with key values event= " 9213 " and opecode= " 4 " , and they are stored in an xml file.

The objectifying the structure class and the key value to be a class object includes: java language is for object-oriented programming and can only call an object directly, therefore, a class matched with a specific file needs to be created first. The following program is taken as an example:

```
   class Item
   {
       protected String event;
       protected String opecode;
       protected String structname;
       protected String struct;
       public Item(String event, String opecode, String structname, object struct)
       {
           this.event = event;
           this.opecode = opecode;
           this.structname = structname;
           this.struct = struct;
       }
   }
```

Four variables are defined in the class file above; event corresponds to a key value 'event', e.g. event= " 9212 " , opecode corresponds to a key value 'opecode', e.g. opecode= " 3 " , structname corresponds to a structure class name, e.g. InterCommSendXMLReq_T, and struct is used to store a structure object. The class is in one-to-one correspondence with the structure class name, e.g. structname, in other words, one group of corresponding relationship between a structure class and a key value corresponds to one class.

Subsequently, the class is created as a class object. A one-dimensional array is defined and used to store a class object. The length of the one-dimensional array, i.e. the number of elements in the one-dimensional array, corresponds to the number of classes, in other words, one corresponding relationship between a structure class and a key value corresponds to one one-dimensional array element, and one class object is stored in one one-dimensional array element, e.g. provided that there are two corresponding relationships between structure classes and key values in an xml file, then the length of the one-dimensional array is 2, wherein provided that a one-dimensional array element of a class object corresponding to the structure class and the key value in the first corresponding relationship between a structure class and a key value is A[0], and a one-dimensional array element of a class object corresponding to the structure class and the key value in the second corresponding relationship between a structure class and a key value is A[1]. The signaling tracing background adds the key values to the corresponding class objects, simultaneously creates objects of the structure classes, i.e. structure objects, according to the structure construction methods included in the structure classes in the specific file, and adds the structure objects to the class objects corresponding to matched classes, e.g. in the xml file, adding the key value in the first corresponding relationship between a structure class and a key value to A[0], and creating the structure class in the first corresponding relationship between a structure class and a key value as a structure object according to the structure construction method and adding it to A[0]; and adding the key value in the second corresponding relationship between a structure class and a key value to A[1], and creating the structure class in the second corresponding relationship between a structure class and a key value as a structure object according to the structure construction method and adding it to A[1]. The signaling tracing background stores the class objects, and the classes and class objects are different structure forms.

Step 102: A signaling tracing foreground receives a tracing condition from the signaling tracing background, and sends a signaling to the signaling tracing background.

The signaling tracing background sends a tracing condition to the signaling tracing foreground, and the tracing condition includes a terminal number which needs to be traced and the service type of a signaling, and etc. The signaling tracing foreground receives the tracing condition, reads a signaling which accords with the tracing condition from a service processor, adds a key value to the signaling according to the structure rule and sends the signaling to the signaling tracing background. Similarly, the signaling tracing background may send tracing canceling information to the signaling tracing foreground, then the signaling tracing foreground stops tracing and stops sending a signaling to the signaling tracing background.

Step 103: The signaling tracing background determines a matched class object according to the key value in the signaling, and displays the signaling as a tree structure according to the class object.

The signaling tracing background receives the signaling, reads the key value in the signaling and enquires a stored class object according to the key value; if a key value in the class object is not matched with the key value in the read signaling, then the process is ended;
if the key value in the class object is matched with the key value in the read signaling, the structure object of the class object is read; when a user chooses to check the structure of the signaling, the structure field assignment method in the structure object is called to add contents corresponding to a structure field in the signaling, e.g. a value, to a structure field corresponding to the structure object. Taking a signaling structure InterCommSendXMLReq_T for example, the structure field assignment process is described as follows:

```
   public void parse(byte input[],int start)
   {
           TLangAdaptor adaptor = new TLangAdaptor(platform, bitorder);
           all_len = adaptor.getint(input,"unsigned short",start);
           start = start+2;
           tag_did = adaptor.getshort(input,"unsigned char",start);
           start = start+1;
           d_id.parse(input,start);
           start = start + d_id.length;
           i_id = adaptor.getshort(input,"unsigned char",start);
           start = start+1;
           tag_lid = adaptor.getshort(input,"unsigned char",start);
           start = start+1;
           I_id = adaptor.getshort(input,"unsigned char",start);
           start = start+1;
           opercode.parse(input,start);
           start = start + opercode.length;
           I_component = adaptor.getshort(input,"unsigned char",start);
           start = start+1;
           i_para.parse(input,start);
           start = start + i_para.length;
   };
```

The contents of the signaling are parsed according to a platform type 'platform' and a bit order 'bitorder'. The platform type and the bit order are predefined parameters. Provided that the platform is an intel platform when the platform is true and parsing is performed from high to low when the bitorder is true; according to a byte length of a leaf node type and taking all_len for example, the type of all_len is int and the byte length is 2, then the contents corresponding to all_len are the contents of a 2-byte length which are selected from high to low in the signaling and correspond to a structure object.

Subsequently, the signaling is displayed as a tree structure according to a tree structure display method in the structure object, which includes the following specific contents: a tree structure class StructTree is created first, and the tree structure class StructTree includes a node name structName, sonTree, node information structInfo, a structure start position startIndex and end position endIndex, and the specific structure is described as follows:

```
public class StructTree
   {
           public String structName;
           public Vector sonTree;
           public String structInfo;
           public int startIndex,endIndex;
           public StructTree(String name,String info,int start,int end)
           {
               structName = name;
               structInfo = info;
               sonTree = null;
               startIndex=start;
               endIndex=end;
           }
           public void addTreeNode(StructTree tree)
           {
               if(sonTree = = null)
                       sonTree = new Vector();
               sonTree.add(tree);
           }
   }
```

Subsequently, the tree structure class StructTree is created as an object, i.e. a tree structure class object, and a structure field in the structure object is taken as a node. The node includes a root node and leaf nodes, etc. and the start position and the end position of the node in the tree structure class object may be obtained according to a byte length of a node type; then, a tree node is created as a node object according to node information, and the created node object is added to a tree structure class object, wherein the node information includes a node name, contents corresponding to the node, a node start position and a node end position. Displaying a signaling with a signaling structure InterCommSendXMLReq_T as a tree structure is described as follows for example:

```
 public StructTree getStructTree(int startindex)
   {
           int start=startindex,end=startindex;
           StructTree tree = new StructTree();
           start=end;end+=2;
           tree.addTreeNode(new
                       StructTree("all_len",Integer.toString(all_len),start,end));
           start=end;end+=1;
           tree.addTreeNode(new
                       StructTree("tag_did",Integer.toString(tag_did),start,end));
           start=end;end+=d_id.length;
           StructTree d_idtree = d_id.getStructTree(start);
           d_idtree. structName = "d_id";
           tree.addTreeNode(d_idtree);
           start=end;end+=1;
           tree.addTreeNode(new StructTree("i_id",Integer.tostring(i_id),start,end));
           start=end;end+=1;
           tree.addTreeNode(new
                       StructTree("tag_lid",Integer.toString(tag_lid),start,end));
           start=end;end+=1;
           tree.addTreeNode(new StructTree("I_id",Integer.toString(I_id),start,end));
           start=end;end+=opercode.length;
           StructTree opercodetree = opercode.getStructTree(start);
           opercodetree.structName = "opercode";
           tree.addTreeNode(opercodetree);
           start=end;end+=1;
           tree.addTreeNode(new
               StructTree("I_component",Integer.toString(I_component),start,end));
           start=end;end+=i_para.length;
           StructTree i_paratree = i_para.getStructTree(start);
           i_paratree.structName = "i_para";
           tree.addTreeNode(i_paratree);
           tree.structName = "InterCommSendXMLReq_T";
           return tree;
       }
```

StructTree is created as a tree structure class object. Taking a leaf node all_len in InterCommSendXMLReq_T for example, the start position and the end position of all_len in the tree structure class object is obtained according to the type of all_len, i.e. the byte length of int. If the byte length of int is 2, then the start portion of all_len is 0 and the end position is 2. Subsequently, all_len is created as a node object, i.e. new StructTree ("all_len",Integer.toString(all_len),start,end), according to all_len information, and the created all_len is added to the tree structure class object.

Based on the method above, the disclosure further provides a signaling display system. As shown in Fig. 2, the system includes: a conversion module 201, a signaling tracing background 202 and a signaling tracing foreground 203;
the conversion module 201 is configured to convert a signaling structure represented in C language into a signaling structure, which is called a structure class, represented in java language, and preset a structure construction method, a structure field assignment method and a tree structure display method in the structure class at the same time; the structure class may be self-named as required; the structure construction method refers to program codes of the structure construction method, which is a common construction method in java and used to create a structure class as a structure object; the structure field assignment method refers to program codes of the structure field assignment method and is used to assign contents corresponding to a structure field to a corresponding structure field; and the tree structure display method refers to program codes of the tree structure display method and is used to display a signaling as a tree structure.

The signaling tracing background 202 is configured to configure a corresponding relationship between a structure class and a key value according to a structure rule, store the corresponding relationship in a specific file which is a file, e.g. an xml file, that can be parsed by the signaling tracing background, objectify the structure class and the key value to be a class object; send a tracing condition to the signaling tracing foreground 203, received a signaling from the signaling tracing foreground 203, determine a key value in the received signaling to be matched with the class object and display the signaling as a tree structure according to the class object. The corresponding relationship between a structure class and a key value is a corresponding relationship between name of the structure class and the key value.

The signaling tracing foreground 203 is configured to receive the tracing condition sent by the signaling tracing background 202, determine a signaling matched with the tracing condition, add a key value to the signaling according to the structure rule and send the signaling including the key value to the signaling tracing background 202. The structure rule includes the type of a specific signaling and the types and number of key values which need to be associated.

The signaling tracing background 202 is specifically configured to create a class matched with the specific file. The class is in one-to-one correspondence with the corresponding relationship between a structure classes and a key value in the specific file, and a class object is further created. The class object is in one-to-one correspondence with the class, in other words, one corresponding relationship between a structure class and a key value in the specific file corresponds to one class object. A one-directional array is defined, and an element in the one-directional array corresponds to the class object and is configured to store the class object. A key value in the specific file is added to a corresponding class object. A structure class corresponding to name of the structure class in the specific file is read. A structure class object, i.e. a structure object, is created according to the structure construction method in a structure class and added to a corresponding class object.

The signaling tracing background 202 is specifically configured to read the key value in the received signaling, enquire a stored class object according to the key value, and determine that the key value in the received signaling is matched with the class object when the key value in the class object is identical with the key value in the signaling.

The signaling tracing background 202 is specifically configured to read the structure object in the class object, call the structure field assignment method in the structure object, add contents of a structure field in the signaling to a corresponding structure field in the structure object, and call the tree structure display method in the structure object to display the signaling as a tree structure.

The signaling tracing background 202 is further configured to send tracing canceling information to the signaling tracing foreground 203.

The signaling tracing foreground 203 is configured to receive the tracing canceling information, stops signaling tracing and stops sending a signaling to the signaling tracing background 202.

The above are only preferred embodiments of the disclosure and should not be used to limit the protection scope of the disclosure. Any modifications, equivalent replacements, improvements and the like within the disclosure shall fall within the scope of protection of the disclosure.

## Claims

1. A signaling display method, comprising:
converting, by a conversion module, a signaling structure represented in a first language into a structure class represented in a second language; and
configuring, by a signaling tracing background, a corresponding relationship between a structure class and a key value, and objectifying the structure class and the key value to be a class object; and when determining a key value in a received signaling to be matched with the class object, displaying the received signaling as a tree structure according to the class object.

2. The method according to claim 1, wherein the first language is C language and the second language is java language.

3. The signaling display method according to claim 2, wherein the configuring, by a signaling tracing background, a corresponding relationship between a structure class and a key value comprises:
configuring, by the signaling tracing background, a corresponding relationship between name of the structure class and the key value according to a structure rule and storing, by the signaling tracing background, the corresponding relationship in a specific file.

4. The signaling display method according to claim 3, wherein the objectifying the structure class and the key value to be a class object comprises:
creating a class matched with the specific file, creating a class object of the class, adding a key value to the class object, creating a structure object of the structure class according to a structure construction method in the structure class, adding the structure object to the class object and storing the class object.

5. The signaling display method according to any one of claims 1 to 4, wherein the determining a key value in a received signaling to be matched with the class object comprises:
receiving a signaling which includes a key value added according to a structure rule, reading the key value in the signaling, enquiring a class object according to the key value and determining the key value in the signaling to be matched with the class object when the key value in the class object is identical with the key value in the signaling.

6. The signaling display method according to claim 4, wherein the displaying the received signaling as a tree structure according to the class object comprises:
reading the structure object in the class object, calling a tree structure display method in the structure object, and displaying the signaling as a tree structure; and calling a structure field assignment method in the structure object and adding contents corresponding to a structure field in the signaling to a corresponding structure field of the tree structure.

7. A signaling display system, comprising: a conversion module, a signaling tracing foreground and a signaling tracing background; wherein
the conversion module converts a signaling structure represented in a first language into a structure class represented in a second language;
the signaling tracing foreground, according to a tracing condition sent by the signaling tracing background, sends a signaling including a key value to the signaling tracing background; and
the signaling tracing background configures a corresponding relationship between a structure class and a key value, and objectifies the structure class and the key value to be a class object; and sends the tracing condition to the signaling tracing foreground, and when determining the key value in the received signaling to be matched with the class object, displays the received signaling as a tree structure according to the class object.

8. The system according to claim 7, wherein
the conversion module converts the signaling structure represented in C language into the structure class represented in java language.

9. The signaling display system according to claim 8, wherein
the signaling tracing background configures a corresponding relationship between name of the structure class and the key value according to a structure rule and stores the corresponding relationship in a specific file.

10. The signaling display system according to claim 9, wherein
the signaling tracing background creates a class matched with the specific file, creates a class object of the class, adds a key value to the class object, creates a structure object of the structure class according to a structure construction method in the structure class, adds the structure object to the class object and stores the class object.

11. The signaling display system according to any one of claims 7 to 9, wherein
the signaling tracing background reads the key value in the received signaling, enquires a class object according to the key value, and determines that the key value in the signaling to be matched with the class object when the key value in the class object is identical with the key value in the signaling.

12. The signaling display system according to claim 10, wherein
the signaling tracing background reads the structure object in the class object, calls a tree structure display method in the structure object, and displays the received signaling as a tree structure; and calls a structure field assignment method in the structure object, and adds contents of a structure field in the signaling to a corresponding structure field in the tree structure.
